(19) **Europäisches Patentamt**

**European Patent Office**

**Office européen des brevets**

(11) **EP 0 874 533 B1**

(12) **FASCICULE DE BREVET EUROPEEN**

(45) Date de publication et mention
de la délivrance du brevet:
**15.12.2004 Bulletin 2004/51**

(51) Int Cl.$^7$: **H04Q 11/04**

(21) Numéro de dépôt: **98460001.5**

(22) Date de dépôt: **09.02.1998**

(54) **Procédé d'ordonnancement de paquets à pertes équitables**

Verfahren zur gerechten Paketablaufsteuerung

Fair packet scheduling

(84) Etats contractants désignés:
**DE GB**

(30) Priorité: **23.04.1997 FR 9705239**

(43) Date de publication de la demande:
**28.10.1998 Bulletin 1998/44**

(73) Titulaire: **FRANCE TELECOM SA**
**75015 Paris (FR)**

(72) Inventeurs:
• **Toutain, François**
**35235 Thorigne-Fouillard (FR)**
• **Hamdi, Maher**
**35700 Rennes (FR)**
• **Rolin, Pierre**
**35510 Cesson Sevigne (FR)**

(74) Mandataire: **Maillet, Alain et al**
**SCP Le Guen & Maillet,**
**5, Place Newquay,**
**B.P. 70250**
**35802 Dinard Cedex (FR)**

(56) Documents cités:
• **ABHAY K PAREKH ET AL: "A GENERALIZED PROCESSOR SHARING APPROACH TO FLOW CONTROL IN INTEGRATED SERVICES NETWORKS-THE SINGLE NODE CASE" ONE WORLD THROUGH COMMUNICATIONS, FLORENCE, MAY 4 - 8, 1992, vol. 2 OF 3, 3 août 1992, INSTITUTE OF ELECTRICAL AND ELECTRONICS ENGINEERS, pages 915-924, XP000300228**
• **PARK K: "SELF-ORGANIZED MULTI-CLASS QOS PROVISION FOR ABR TRAFFIC IN ATM NETWORKS" PROCEEDINGS OF THE 1996 IEEE FIFTEENTH ANNUAL INTERNATIONAL PHOENIX CONFERENCE ON COMPUTERS AND COMMUNICATIONS, SCOTTSDALE, MAR. 27 - 29, 1996, no. CONF. 15, 27 mars 1996, INSTITUTE OF ELECTRICAL AND ELECTRONICS ENGINEERS, pages 446-453, XP000594811**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention concerne un procédé d'ordonnancement de paquets à pertes équitables. Un tel procédé est notamment applicable dans un réseau à intégration de services à haut débit, tel qu'un réseau utilisant la technique dite ATM (Asynchronous Transfer Mode). Dans un tel réseau, qui est du type à commutation de paquets, les paquets d'une connexion interagiront, à chaque noeud où se trouve normalement un élément de commutation, avec des paquets d'autres connexions.

De tels réseaux sont destinés à permettre des communications entre applications qui demandent auxdits réseaux des performances toujours plus contraignantes en termes de délais d'acheminement, de gigue (variation de délai), de pertes de paquets, de débit minimal, etc.

Les réseaux à commutation de paquets classiques sont du type dit à best-effort, c'est-à-dire qu'ils n'offrent pas des garanties de service. La philosophie sous-jacente à ce type de réseau est que l'intelligence est concentrée dans les applications, le réseau quant à lui étant aussi simple que possible. Il en résulte qu'en cas de surcharge du réseau, les performances peuvent se dégrader de manière importante, pouvant amener à une perte de paquets significative. Par ailleurs, la cohabitation d'applications requérant des qualités de service différentes réclame qu'elles aient un comportement homogène vis-à-vis d'une congestion, c'est-à-dire qu'elles respectent une règle de réduction de leur débit, sous peine d'aboutir à des situations dans lesquelles certaines applications, plus "agressives", sont de ce fait privilégiées et consomment la majeure partie de la bande passante au détriment des applications plus conservatives (plus respectueuses de la règle de comportement). Ce phénomène risque d'être d'autant plus important que les applications sont gourmandes en bande passante. Ainsi, il paraît peu vraisemblable que plusieurs applications audio et vidéo soient capables de cohabiter harmonieusement.

Pour résoudre ces problèmes, on a mis en oeuvre des procédés d'ordonnancement qui permettent la commande, à chaque noeud, de l'ordre dans lequel les paquets issus de différentes connexions sont servis. Ces procédés sont dits équitables car, associés à des contrôles de conformité et d'admission, ils permettent de garantir qu'une fraction donnée de la bande passante d'un noeud est explicitement dédiée à une connexion particulière. Une telle garantie de débit, étendue à tous les noeuds d'un chemin donné, constitue un préalable à la fourniture de garanties de service plus évoluées, portant sur le délai, la gigue, ou encore les pertes. De façon similaire, sa relaxation offre l'opportunité d'améliorer l'utilisation du réseau tout en offrant un engagement statistique quant à la qualité du service fourni.

Ainsi, pendant la phase d'établissement de l'appel, une requête portant sur les caractéristiques de trafic et les performances souhaitées est émise. Un ensemble de conditions de contrôle d'admission de la connexion est testé à chaque noeud du réseau. La nouvelle connexion est alors acceptée par le réseau si les ressources du réseau disponibles sont suffisantes pour satisfaire la requête de la nouvelle connexion sans pour cela perturber les connexions existantes. Alors le réseau garantit que les performances requises seront respectées tant que le client respecte ses caractéristiques de trafic.

Un procédé d'ordonnancement est mis en oeuvre à chaque noeud du réseau et consiste à déterminer le paquet à servir pour émission en discriminant les paquets selon les caractéristiques de trafic de leurs requêtes de performances.

Un premier procédé d'ordonnancement connu sous le nom de discipline de service "First In, First Out" (FIFO), met en oeuvre une file d'attente pour chaque lien de sortie d'un noeud du réseau, dans laquelle sont multiplexés les flux entrants.

En marge du procédé FIFO utilisé classiquement, Demers et al et Parekh et Gallager ont proposé conjointement un autre procédé connu sous l'appellation Generalized Processor Sharing Discipline, ou discipline GPS. Des descriptions de ce procédé sont faites, d'une part, dans l'article paru dans la revue Journal of Internet Working Research and Experiment, d'octobre 1990 pages 3 à 26 et intitulé "Analysis and simulation of a fair queueing algorithm" et, d'autre part, dans un autre article paru dans la revue Proceedings of IEEE of Infocom, pages 914 à 924 de 1992 et intitulé "A Generalized Processor Sharing Approach to Flow Control in Integrated Services Networks - The single Node Case". On rappelle ci-après le principe de ce procédé.

Soit une collection de poids $r_1,...,r_N$ associés aux flux 1,...,N. Un noeud met en oeuvre la discipline GPS si, étant donné deux instants $s$ et $t$, les quantités de données $W_i (s, t)$ et $W_j (s,t)$ servies pour deux flux $i$ et $j$ actifs entre $s$ et $t$ sont telles que :

$$\frac{W_i(s,t)}{W_j(s,t)} = \frac{r_i}{r_j} \tag{1}$$

Un flux est actif entre $s$ et $t$ si au moins un paquet dudit flux est présent dans la file ou est en cours de service entre les instants $s$ et $t$.

Les poids $r_1$ à $r_N$ sont directement proportionnels aux débits respectivement alloués aux connexions 1 à N.

Aussi, un tel procédé d'ordonnancement peut être considéré comme équitable en ce sens qu'il permet le partage de la capacité de sortie en exacte proportion des poids et donc des débits alloués aux différents flux.

On considère également que la relation ci-dessus définit un modèle fluide. En effet, si l'on fait l'hypothèse de flux fluides, il est possible de servir des unités de trafic aussi petites que l'on veut ou, de façon équivalente, de servir tous les flux en parallèle. En conséquence, il est possible de diviser le service en proportion exacte des poids des flux, et ce, à tout instant. Néanmoins, le problème que pose un modèle fluide est celui de sa mise en oeuvre dans le contexte de flux constitués de paquets.

L'équation (1) peut se réécrire sous la forme :

$$\frac{W_i(s,t)}{r_i} = \frac{W_j(s,t)}{r_j} = q(s,t) \qquad (2)$$

La quantité $q(s,t)$ est nommée quantité de service normalisée. Pour un flux $k$, cette quantité est généralement notée $w_k(s,t) = \frac{W_k(s,t)}{r_k}$. On peut écrire :

$$q(s,t) = v(t) - v(s) \qquad (3)$$

La fonction $v(t)$ représente l'évolution dans le temps de la fonction $q(s,t)$ et est appelée fonction de temps virtuel du système. Le temps virtuel ainsi défini progresse au rythme de l'accroissement de service dans le système. On montre que $v(t)$ est une fonction monotone croissante, linéaire par morceaux, et dont la pente à tout instant $t$ est inversement proportionnelle à la somme des poids des flux qui sont alors actifs.

Dans les réseaux actuels, un seul flux est servi à un instant donné, et ce service correspond à la transmission, non préemptible, d'un paquet de données de taille variable. Il est par conséquent nécessaire d'approximer le modèle fluide exposé ci-dessus par un mécanisme qui manipule des entités finies telles que des paquets tout en s'approchant le plus possible de l'équité "idéale" du modèle fluide. Le principe général des implémentations connues, dites de fair queueing, nommées indifféremment PGPS (Packetized Generalized Processor Sharing) ou WFQ (Weighted Fair Queueing) repose sur l'estampillage des paquets entrants à l'aide de la fonction de temps virtuel du serveur, et leur insertion dans une file triée par estampilles croissantes. Le paquet sélectionné pour transmission est alors le premier paquet de la file.

Le but de l'invention est différent de celui du modèle fluide exposé ci-dessus. En effet, il est possible de distinguer trois types de garanties qui doivent être offertes à l'utilisateur d'une application adaptative. La première garantie porte sur le débit. En effet, pour les raisons de seuil d'adaptation évoquées plus haut, il est impératif de fournir une borne minimum de débit qui est réservée au flux considéré. Ce débit minimum garanti permettra, par exemple, de servir la bande de base d'un flux hiérarchique ou se transposera en un taux de perte maximum garanti dans le cas d'un flux redondant.

La seconde garantie porte sur le délai. Nous nous intéresserons par la suite au délai de service d'un paquet qui se décompose en un délai d'attente dans la file et en un délai de transmission sur le lien, les délais de propagation et de gigue n'étant pas abordés. En effet, que l'application obéisse à une contrainte d'interactivité ou non, le ou les récepteurs doivent se munir d'une file de réception, nommée dans le domaine de la technique "playout buffer", dont la longueur est déterminée par le délai maximum auquel ce ou ces récepteurs peuvent s'attendre. On notera que ce délai maximal garanti porte sur tous les paquets du flux, et non pas sur le débit minimal réservé.

La troisième garantie est de nature différente : un utilisateur peut en effet légitimement demander que son flux ne subisse des dégradations que si les flux des autres usagers sont également dégradés, et ce dans les mêmes proportions. Il s'agit donc d'une garantie portant sur l'équité du partage des ressources dans le réseau, corollaire du comportement homogène sur réseau best-effort, évoqué ci-dessus. Ici pourtant, c'est le réseau qui s'engage à fournir un service équitable, indépendamment du comportement des applications, qui n'ont par conséquent pas l'obligation de coopérer.

Le but de la présente invention est de proposer un procédé qui permette d'offrir ces trois garanties. Il est par conséquent de définir simultanément une équité de partage de la bande passante qui réponde aux besoins des flux adaptatifs et un modèle fluide, susceptible d'être approximé par un mécanisme manipulant des paquets.

A cet effet, un procédé d'ordonnancement de paquets selon l'invention est du type qui consiste à servir sur un lien de sortie d'un noeud d'un réseau les paquets issus d'une pluralité de flux de paquets d'entrée, un débit minimum $r_i$ étant réservé par chaque flux d'entrée et un débit $x_i(t)$ étant alloué à chaque temps $t$ à chaque flux d'entrée. Il est caractérisé en ce que les paquets sont servis de manière qu'à tout temps, le rapport de la partie $\Delta x_i(t)$ du débit alloué $x_i(t)$ au delà du débit minimum réservé $r_i$ sur la partie $e_i(t)$ du débit instantané $\lambda_i(t)$ au delà du débit minimum réservé $r_i$ prenne une même valeur $K(t)$, à ce temps, pour tous les flux qui sont actifs.

La présente invention concerne également des systèmes prévus pour la mise en oeuvre d'un procédé d'ordonnancement selon l'invention.

Les caractéristiques de l'invention mentionnées ci-dessus, ainsi que d'autres, apparaîtront plus clairement à la lecture de la description faite en relation avec les dessins joints parmi lesquels :

la Fig.1 est un système d'ordonnancement selon un premier mode de réalisation prévu pour la mise en oeuvre du procédé de l'invention, et
la Fig. 2 est un tel système selon un second mode de réalisation prévu pour la mise en oeuvre du procédé de l'invention.

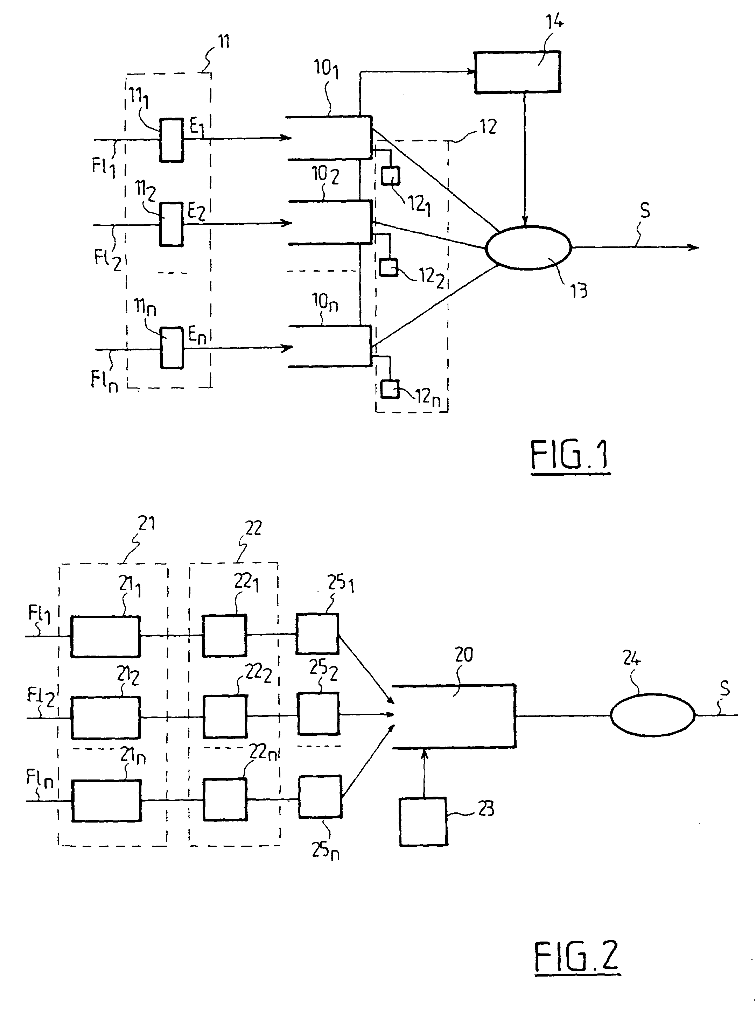

Pour la suite de la description, on va d'abord considérer le système qui est représenté la Fig. 1. Celui-ci est constitué de N files d'entrée $10_1$ à $10_N$ qui reçoivent à leurs entrées respectives $E_1$ à $E_N$ des flux actifs $F_1$ à $F_N$. Les files d'entrée $10_1$ à $10_N$ sont reliées à un noeud du réseau $\underline{N}$ dont la sortie donne sur un lien de sortie $\underline{S}$ de capacité C.

Soit $r_1$ à $r_N$ les débits minimum réservés au moment de l'établissement des communications respectivement responsables des flux $F_1$ à $F_N$, $\lambda_1(t)$ à $\lambda_N(t)$ les débits instantanés effectivement soumis au temps $t$ par les flux $F_1$ à $F_N$. On va considérer que, d'une part, les files d'entrée $10_1$ à $10_N$ ont respectivement les tailles $B_1$ à $B_N$ et que, d'autre part, leurs remplissages à l'instant $t$ sont respectivement égaux à $b_1(t)$ à $b_N(t)$. Ainsi, la réservation qui est faite au moment de l'établissement de chaque communication correspond à un seau percé (*leaky bucket*) de paramètres $r_i$, $B_i$.

On définit le trafic en excès $e_i(t)$ comme étant le trafic qui excède le débit minimum réservé $r_i$ lorsque la file correspondante $10_i$ est pleine, c'est-à-dire lorsque $b_i(t) = B_i$. On notera que $b_i(t)$ est égale à $B_i$ lorsqu'une congestion est présente sur le flux $F_i$.

Par définition, ce trafic en excès est donc égal à :

$$e_i(t) = \lambda_i(t) - r_i \text{ lorsque } b_i(t) = B_i. \tag{4}$$

De même, on définit la partie $\Delta x_i(t)$ du débit alloué $x_i(t)$ à l'instant t au delà du débit réservé $r_i$ :

$$\Delta x_i(t) = x_i(t) - r_i \tag{5}$$

Selon l'invention, les paquets des files $10_1$ à $10_N$ seront servis sur le lien de sortie $\underline{S}$ de manière que le rapport, au temps $t$, de la partie $\Delta x_i(t)$ du débit alloué $x_i(t)$ au delà du débit minimum réservé $r_i$ sur la partie $e_i(t)$ du débit réel $\lambda_i(t)$ au delà du débit minimum réservé $r_i$ est égal à une même valeur, à ce temps $t$, pour tous les flux actifs $F_i$. Cette valeur est notée $K(t)$.

Cette caractéristique se traduit par l'expression suivante :

$$\forall t, \ \forall i, \ \forall j, \ \frac{\Delta x_i(t)}{e_i(t)} = \frac{\Delta x_j(t)}{e_j(t)} = K(t) \tag{6}$$

On rappelle que dans cette expression, seuls les flux $F_1$ à $F_N$ qui sont actifs à l'instant $t$ sont considérés, c'est-à-dire les flux dont au moins un paquet est présent dans la file correspondante.

On peut montrer, en sommant l'expression (6) pour les différents flux actifs que la valeur $K(t)$ est donnée, au temps $t$, par la relation suivante :

$$K(t) = \frac{\left( C - \sum_{j \in \beta(t)} r_j \right)}{\sum_{j \in \beta(t)} e_j(t)} \tag{7}$$

où $\beta(t)$ est l'ensemble $\{F_1 \text{ à } F_N\}$ des flux actifs à l'instant t.

On en déduit que le débit instantané alloué au temps $t$ à un flux $F_i$ actif est donné par la relation suivante :

$$x_i(t) = r_i + K(t) \cdot e_i(t)$$

$$= r_i + \frac{e_i(t)}{\sum\limits_{j \in \beta(t)} e_j(t)} \cdot \left( C - \sum\limits_{j \in \beta(t)} r_j \right) \qquad (8)$$

On peut montrer que pour tous flux $F_i$, $F_j$, tels que les débits en excès $e_i(t)$ et $e_j(t)$ sont positifs, c'est-à-dire pour lesquels les débits réels $\lambda_i(t)$ et $\lambda_j(t)$ respectivement soumis aux entrées des files $10_i$ et $10_j$ sont respectivement supérieurs aux débits minimum réservés $r_i$ et $r_j$, on a :

$$\frac{\lambda_i(t) - x_i(t)}{\lambda_i(t) - r_i} = \frac{\lambda_j(t) - x_j(t)}{\lambda_j(t) - r_j} \qquad (9)$$

Chacune de ces quantités représente les taux de perte du trafic en excès pour chacun des flux $F_i$ et $F_j$. Ainsi, on montre que les taux de perte du trafic en excès pour les flux $F_i$ et $F_j$ sont égaux. Il y a donc équité de perte.
De plus, si on met en oeuvre une procédure d'admission d'une nouvelle communication qui n'autorise une telle admission que seulement lorsque la somme de tous les débits minimum réservés $r_i$ est inférieure à la capacité maximale C du lien de sortie S, c'est-à-dire lorsqu'on a :

$$\sum_{i=1}^{N} r_i \le C \qquad (10)$$

alors, pour tout flux $F_i$, le débit minimum réservé $r_i$ constitue une borne minimale de débit et, par conséquent, le rapport $B_i$ sur $r_i$ constitue une borne maximale de délai.
Dans le cas particulier où les débits minimum réservés sont nuls, la relation (5) s'écrit :

$$\Delta x_i(t) = x_i(t) \qquad (11)$$

et la relation (6) devient :

$$\frac{x_i(t)}{x_j(t)} = \frac{\lambda_i(t)}{\lambda_j(t)} \qquad (12)$$

ce qui peut se réécrire :

$$\frac{\lambda_i(t) - x_i(t)}{\lambda_i(t)} = \frac{\lambda_j(t) - x_j(t)}{\lambda_j(t)} \qquad (13)$$

En d'autres termes, une allocation équitable à tout instant t aboutit à équilibrer les taux de perte de tous les flux actifs $F_1$ à $F_N$.
On a donc démontré qu'un procédé selon l'invention permet d'obtenir une garantie de débit qui correspond au débit minimum réservé $r_i$ et également une garantie de délai qui est donc donnée par $\frac{B_i}{r_i}$. Par ailleurs, il permet de garantir une équité de perte.

On va maintenant décrire comment la méthode exposée ci-dessus peut être mise en oeuvre pour tenir compte du fait qu'elle doit s'appliquer à des paquets ou des cellules de longueur finie, qui ne peuvent être servis que l'un après l'autre et complètement à chaque fois.

Le système représenté à la Fig. 1 comprend, pour chaque entrée $E_k$, une unité $11_k$ qui est prévue pour calculer, à chaque instant $t$, la valeur du débit instantané du flux d'entrée $F_k$ (k = 1 à N) notée ci-après $\lambda_k^p(t)$. Ce calcul est effectué par une méthode d'estimation notée $P$. Lorsqu'un nouveau paquet $p_k^i$, qui est par exemple le $i^{ème}$ paquet d'une séquence d'un flux $F_k$, est soumis au système, il est stocké dans la file $10_k$ correspondante en queue de cette file, dans la limite de sa capacité.

On notera que les unités $11_k$ peuvent être mises en oeuvre au moyen d'une unité 11 unique, comme cela est représenté en pointillés à la Fig. 1.

A l'instant, noté dans la suite de la description $a_k^i$, où un paquet $p_k^i$ arrive, non pas en queue de la file $10_k$ mais en tête de cette file $10_k$ où il est prêt à être lu et servi, une estampille dont la valeur est notée $F_k^i$ est affectée à ce paquet $p_k^i$. Cette valeur $F_k^i$ est calculée par une unité $12_k$ du système. L'estampille $F_k^i$ permet au système de commander l'émission dudit paquet $p_k^i$ sur le lien de sortie $\underline{S}$ à un instant tel que le débit alloué au flux $F_k$ soit conforme au procédé de l'invention et, en particulier, conforme à la relation (8) ci-dessus. Cette commande d'émission est effectuée par une unité de commande 13 commune à toutes les files $10_1$ à $10_k$.

On notera que les unités $12_k$ peuvent être mises en oeuvre au moyen d'une unité 12 unique, comme cela est représenté en pointillés à la Fig. 1.

Ainsi, le processus d'émission d'un paquet $p$ sur le lien de sortie $\underline{S}$ est le suivant. A un temps $t$ donné, dans la tête de chaque file $10_k$ (k = 1 à N), est stocké un paquet $p_k$ auquel est affectée l'estampille correspondante $F_k$. Une unité 14 tient une liste des flux $F_1$ à $F_N$ qui sont à servir, liste qui est triée par estampilles croissantes. Lorsqu'un nouveau paquet $p$ est à servir sur le lien de sortie $\underline{S}$, l'unité de commande 13 consulte la tête de la liste de l'unité 14, laquelle indique donc le prochain paquet à servir, c'est-à-dire celui dont l'estampille est la plus petite.

On va maintenant expliciter le calcul de l'estampille $F_k^i$ qui est affectée au $i^{ème}$ paquet $p_k^i$ d'une séquence d'un flux $F_k$ à son temps d'arrivée $a_k^i$. On rappelle que le débit instantané du flux $F_k$ est estimé par une méthode $P$ et que sa valeur est notée $\lambda_k^p(t)$.

La valeur du débit en excès du flux $F_k$ est déduite de la valeur estimée du débit instantané $\hat{\lambda}_k^p(t)$ et est donc égale à :

$$\hat{e}_k^P(t) = \left(\hat{\lambda}_k^P(t) - r_k\right) \text{ lorsque } b_i(t) = B_i, \qquad (14)$$

La relation (3) s'écrit maintenant :

$$\frac{\Delta x_i(t)}{\hat{e}_i^P(t)} = \frac{\Delta x_j(t)}{\hat{e}_j^P(t)} = K(t) \qquad (15)$$

qui s'applique à tous les flux $F_k$ actifs, c'est-à-dire à tous les flux $F_k$ qui, au temps $t$ considéré, vérifient la relation suivante :

$$\hat{\lambda}_k^p(t) > 0 \qquad (16)$$

La valeur du débit instantané alloué $\hat{Q}_k^i(t)$ au temps t à un flux $F_k$ est calculée à partir de l'équation (8) et est donc égale à :

$$\hat{Q}_k^P(t) = r_k + \frac{\hat{e}_k^P(t)}{\sum_{j=1}^{N} \hat{e}_j^P(t)} \cdot \left(C - \sum_{j \in \beta(t)} r_j\right) \qquad (17)$$

On note $L_k^i$ la longueur totale dudit paquet $p_k^i$, $a_k^i$ son instant d'arrivée dans la file d'entrée $10_k$, et $d_k^i$ l'instant de son extraction complète ou instant de départ de ladite file $10_k$ ou encore temps de service. On notera également $b_k^i$ le temps de début de l'émission ou de service du paquet $p_k^i$.

On considère que le débit instantané est constant pendant l'émission de tous les bits du paquet $p_k^i$, donc entre les instants $b_k^i$ et $d_k^i$. Comme il est estampillé à son arrivée, c'est-à-dire au temps $a_k^i$, on considère que le débit instantané à un instant $t$ compris entre le temps d'émission $b_k^i$ et le temps d'arrêt $d_k^i$ est égal au débit instantané à l'instant $a_k^i$. On a donc :

$$\hat{\lambda}_k^p(t) = \hat{\lambda}_k^p(a_k^i) \quad \forall t \in \left[ b_k^i, d_k^i \right] \qquad (18)$$

Le débit minimum réservé $r_k$ pour le flux $F_k$ étant constant pour toute la durée de la communication, il s'ensuit que, compte tenu des équations (14) et (18), :

$$\hat{e}_k^p(t) = \hat{e}_k^p(a_k^i) \quad \forall t \in \left[ b_k^i, d_k^i \right] \qquad (19)$$

Lorsque le paquet $p_k^i$, arrive, c'est-à-dire au temps $a_k^i$, la valeur estimée du débit instantané, notée $\hat{\lambda}_j^p$, de chaque flux actif $F_j$ (j = {1 à N}) autre que le flux $F_k$ est en fait celle du débit instantané, notée cette fois-ci

$$\hat{\lambda}_j^p\left(a_j^i\right),$$

de ce flux $F_j$ qui a été estimé au temps d'arrivée $a_j^i$ du paquet $p_j^i$ le plus récent du flux $F_j$. On a donc :

$$\hat{\lambda}_j^p(a_k^i) = \hat{\lambda}_j^p(a_j^i) \qquad (20)$$

D'après les relations (14) et (20), il s'ensuit que :

$$\hat{e}_j^p(t) = \hat{e}_j^p(a_k^i) \quad \forall t \in \left[ b_k^i, d_k^i \right] \qquad (21)$$

On peut alors aisément démontrer, en remplaçant dans la relation (17) les valeurs déduites des relations (18), (19), et (21), que :

$$\hat{Q}_k^p(t) = \hat{Q}_k^p(a_k^i) \quad \forall t \in \left[ b_k^i, d_k^i \right] \qquad (22)$$

En d'autres termes, le débit alloué au flux $F_k$ à tout temps compris dans l'intervalle de temps

$$\left[ b_k^i, d_k^i \right]$$

a même valeur que le débit alloué au flux $F_k$ au temps $a_k^i$.

Le temps total pris par l'émission du paquet $p_k^i$ est le rapport de sa longueur $L_k^i$ sur le débit d'émission de ses bits $Q_k^i$ mais est aussi la différence entre le temps d'arrêt $d_k^i$ et le temps de début d'émission $b_k^i$, c'est-à-dire $d_k^i - b_k^i$.

On peut donc écrire :

$$d_k^i - b_k^i = \frac{L_k^i}{\hat{Q}_j^P(a_k^i)} \qquad (23)$$

Selon un premier mode de réalisation de l'invention, on affecte au paquet $p_k^i$ une estampille dont la valeur $F_k^i$ correspond à son temps de départ théorique de la file $10_k$, soit $F_k^i = d_k^i$.

Le paquet $p_k^i$ est servi à la fin du service du précédent paquet $p_k^{i-1}$ du même flux. En d'autres termes, le temps de début de service $b_k^i$ du paquet $p_k^i$ est égal au temps de fin de service du paquet précédent $p_k^{i-1}$, c'est-à-dire au temps $d_k^{i-1}$ qui, par hypothèse dans ce mode de réalisation, est égal à l'estampille $F_k^{i-1}$ qui a été affectée au paquet $p_k^{i-1}$. La valeur de l'estampille $F_k^i$ peut donc être calculée par la formule récurrente suivante :

$$F_k^i = \frac{L_k^i}{\hat{Q}_j^P(a_k^i)} + F_k^{i-1} \qquad (24)$$

Selon un second mode de réalisation de l'invention, on affecte au paquet $p_k^i$ une estampille $F_k^i$ qui va correspondre à son temps d'extraction complète de la file $10_k$, cette fois-ci exprimé dans une unité de temps virtuel définie par une fonction de temps virtuel que l'on note $v(t)$ et qui, à un temps $t$ fait correspondre un temps virtuel $v(t)$. On a donc

$$F_k^i = v(d_k^i).$$

Par ailleurs, on choisira une fonction de temps virtuel $v(t)$ monotone croissante si bien que l'expression (23) ci-dessus peut s'écrire :

$$v(d_k^i) - v(b_k^i) = \frac{L_k^i}{\hat{Q}_j^P(a_k^i)} \qquad (25)$$

Or, le paquet $p_k^i$ ne peut être servi avant son arrivée $a_k^i$ et avant que le précédent paquet $p_k^{i-1}$ du flux $F_k$ n'ait été complètement servi. Par conséquent, on a :

$$b_i^k = \max(a_k^i, d_k^{i-1}) \qquad (26)$$

où max(x, y) est la fonction qui, à deux valeurs de x et y, fait correspondre la plus grande valeur des deux.

Cette relation est conservée en temps virtuel et l'on peut donc écrire :

$$v(b_i^k) = \max(v(a_k^i), v(d_k^{i-1})) \qquad (27)$$

On a donc :

$$v\left(d_k^i\right) = \frac{L_k^i}{\hat{Q}_j^P\left(a_k^i\right)} + \max(v\left(a_k^i\right), v\left(d_k^{i-1}\right)) \qquad (28)$$

Donc l'estampille $F_k^i$ sera, dans ce second mode de réalisation, égale à :

$$F_k^i = \frac{L_k^i}{\hat{Q}_j^P\left(a_k^i\right)} + \max(v\left(a_k^i\right), F_k^{i-1}) \qquad (29)$$

On notera que si les débits minimum réservés $r_k$ sont nuls, alors la valeur du débit alloué $\hat{Q}_k^P$ est égale à la valeur du débit instantané $\lambda_k^P$. Dans ce cas, l'expression précédente devient :

$$F_k^i = \frac{L_k^i}{\hat{\lambda}_j^P\left(a_k^i\right)} + \max(v\left(a_k^i\right), F_k^{i-1}) \qquad (30)$$

La fonction de temps virtuel $v(t)$ n'est pas explicitée ici mais elle pourra être identique à celle qui est utilisée dans les procédés d'ordonnancement respectivement connus sous les noms de WFQ (*weighted Fair Queueing*), SCFQ (*Self-Clocked Fair Queueing*), notamment décrits dans un article de Hui Zhang intitulé "Service Disciplines for Guaranteed Performance. Service in Packet-Switching Networks" paru dans la revue "Proceedings of the IEEE", vol 83, No. 10 d'octobre 1995.

On rappelle seulement que l'on définit le service normalisé estimé, reçu par un flux $F_k$ dans l'intervalle de temps compris entre deux temps $t_1$ et $t_2$ par la relation suivante :

$$\hat{w}_k^P\left(t_1, t_2\right) = \int_{t_1}^{t_2} \frac{x_k(t)}{\hat{Q}_k^P(t)} dt \qquad (31)$$

On considère alors la fonction de temps virtuel $v(t)$ dont l'accroissement entre deux temps $t_2$ et $t_1$ est égal au service normalisé estimé d'un flux actif $F_k$ pendant cette période de temps, soit :

$$v\left(t_2\right) - v\left(t_1\right) = \hat{w}_k^P\left(t_1, t_2\right) \qquad (32)$$

Pour un service d'un flux $F_k$, l'origine du temps virtuel $v(t) = 0$ a lieu au temps $t = 0$. On a donc

$$v(0) = 0 \qquad (33)$$

On peut montrer que la fonction $v(t)$ ainsi définie est une fonction monotone croissante.

En ce qui concerne la méthode d'estimation utilisée dans le précédent procédé, toute méthode d'estimation de débit fondée sur l'observation des arrivées successives des paquets peut être employée. Par exemple, on peut utiliser une moyenne exponentielle pondérée (généralement connue sous le nom EWMA comme Exponential Weighted Moving Average) de paramètre k ( par exemple $k = 0{,}9$), telle que la n$^{ième}$ estimation $e_n$ soit donnée par la relation

suivante :

$$e_n = ke_{n-1} + (1 - k)E \qquad (34)$$

où E est la nouvelle valeur intégrée à l'estimation. Par exemple, on pourra donner à la valeur E une valeur définie à partir de la taille du paquet $L_k^i$ et du temps entre les arrivées du présent paquet et du paquet précédent :

$$E = \frac{L_k^i}{a_k^i - a_k^{i-1}} \qquad (35)$$

Pour la mise en oeuvre du procédé de l'invention, on a considéré jusqu'ici le système qui est représenté à la Fig. 1. Mais, on pourrait également utiliser le système qui fait l'objet de la Fig. 2 et qui est maintenant décrit.

Il est constitué d'une unique file 20 dont la sortie donne sur un lien de sortie $\underline{S}$. Cette file 20 comporte N entrées $E_1$ à $E_N$ respectivement alimentées par des flux $F_1$ à $F_N$. Il comporte également, sur chaque entrée $E_1$ à $E_N$, une unité $21_k$ (k = 1 à N) qui, à l'arrivée d'un nouveau paquet $p_k^i$ du flux $F_k$ dans le système, recalcule par une méthode d'estimation $P$ le débit instantané $\lambda_k^{Pi}(t)$ du flux $F_k$. Sur chaque entrée $E_1$ à $E_N$, est également prévue une unité $22_k$ (k = 1 à N) qui effectue, au temps d'arrivée $a_k^i$ du paquet $p_k^i$ dans la file 20, le calcul de la valeur de l'estampille $F_k^i$ et, ce, selon les relations explicitées ci-dessus.

On notera que les unités $21_k$ peuvent être mises en oeuvre au moyen d'une unique unité 21, comme cela est représenté en pointillés à la Fig. 2. Il en est de même en ce qui concerne les unités $22_k$ qui peuvent être mises en oeuvre au moyen d'une unique unité 22 comme cela est visible en pointillés à la Fig. 2.

La date d'arrivée $a_k^i$ d'un paquet $p_k^i$ d'un flux $F_k$ est définie comme étant l'instant réel auquel ce paquet est inséré dans la file 20.

Une unité 23 est prévue pour effectuer le tri de la file 20 par estampilles croissantes. Ainsi, le paquet qui se trouve à la tête de la file 20 est celui auquel a été affectée l'estampille la plus petite.

Une unité 24 est prévue pour commander le début d'émission du paquet présent en tête de la file 20 lorsque le paquet précédent a complètement été extrait de la file 20.

Enfin, une unité de contrôle de débordement $25_k$ est prévue pour rejeter un paquet entrant d'un flux $F_k$ si le nombre de paquets pour ce flux $F_k$ est supérieur à une valeur prédéterminée qui est égale à $B_k$ en reprenant la notation ci-dessus On constate que la file 10 fonctionne alors comme N files virtuelles de capacités respectives $B_1$ à $B_N$, où N est le nombre de flux actifs.

**Revendications**

1. Procédé d'ordonnancement de paquets du type qui consiste à servir sur un lien de sortie d'un noeud d'un réseau les paquets issus d'une pluralité de flux de paquets d'entrée, un débit minimum $r_i$ étant réservé par chaque flux d'entrée et un débit $x_i(t)$ étant alloué à chaque temps $t$ à chaque flux d'entrée, **caractérisé en ce que** les paquets sont servis de manière qu'à tout temps, le rapport de la partie $\Delta x_i(t)$ du débit alloué $x_i(t)$ au delà du débit minimum réservé $r_i$ sur la partie $e_i(t)$ du débit instantané $\lambda_i(t)$ au delà du débit minimum réservé $r_i$ prenne une même valeur $K(t)$, à ce temps, pour tous les flux qui sont actifs.

2. Procédé d'ordonnancement selon la revendication 1, **caractérisé en ce que** ladite valeur de débit instantané est évaluée par une méthode d'estimation $P$, la valeur dudit débit alloué $Q_k^P(t)$ au temps $t$ à un flux $F_k$ est donnée par la relation suivante :

$$\hat{Q}_k^P(t) = r_k + \frac{\hat{e}_k^P(t)}{\sum_{j=1}^{N} \hat{e}_j^P(t)} \cdot \left( C - \sum_{j \in \beta(t)} r_j \right)$$

dans laquelle $r_k$, $r_j$ sont respectivement les débits minimum réservés aux flux $F_k$ et $F_j$, $\hat{e}_k^P(t)$ et $\hat{e}_j^P(t)$ sont les trafics en excès estimés dont les valeurs sont données par les relations suivantes :

$$\hat{e}_k^P(t) = \left( \hat{\lambda}_k^P(t) - r_k \right) \text{ et } \hat{e}_j^P(t) = \left( \hat{\lambda}_j^P(t) - r_j \right).$$

C est le débit maximum du lien de sortie dudit noeud et $\beta(t)$ est l'ensemble des flux actifs à l'instant $t$ {$F_1$ à $F_N$}.

3.  Procédé d'ordonnancement selon la revendication 1 ou 2, **caractérisé en ce qu'**au temps d'arrivée $a_k^i$ du $i^{\text{ème}}$ paquet $p_k^i$ d'une séquence d'un flux de paquets $F_k$ dans le noeud dudit réseau, on affecte audit paquet $p_k^i$ une estampille $F_k^i$, et on utilise ladite valeur d'estampille $F_k^i$ pour assurer la commande du service dudit paquet $F_k^i$ sur le lien de sortie dudit réseau.

4.  Procédé d'ordonnancement selon la revendication 3 mis en oeuvre pour un noeud pourvu d'une pluralité de files d'attente $10_1$ à $10_N$ correspondant aux flux d'entrées, **caractérisé en ce que** le temps d'arrivée $a_k^i$ d'un paquet $p_k^i$ qui est considéré pour le calcul de ladite estampille $F_k^i$ est le temps d'arrivée dudit paquet $p_k^i$ en tête de la file correspondante $10_k$.

5.  Procédé d'ordonnancement selon la revendication 3 mis en oeuvre pour un noeud pourvu d'une unique file d'attente 10 dans laquelle sont stockés les paquets desdits flux d'entrée, **caractérisé en ce que** le temps d'arrivée $p_k^i$ d'un paquet $p_k^i$ qui est considéré pour le calcul de ladite estampille $F_k^i$ est le temps d'arrivée dudit paquet $F_k^i$ dans ladite la file 10.

6.  Procédé d'ordonnancement selon la revendication 3, **caractérisé en ce que** la valeur de l'estampille $F_k^i$ correspond à son temps de départ théorique sur le lien de sortie dudit noeud.

7.  Procédé d'ordonnancement selon la revendication 3, **caractérisé en ce que** la valeur d'estampille $F_k^i$ est donnée par la relation suivante :

$$F_k^i = \frac{L_k^i}{\hat{Q}_j^P(a_k^i)} + F_k^{i-1}$$

dans laquelle $L_k^i$ est la longueur du $i^{\text{ème}}$ paquet $p_k^i$ du flux $F_k$,

$$\hat{Q}_k^P(a_k^i)$$

est le débit qui est alloué audit paquet $p_k^i$ au moment $a_k^i$ de son arrivée dans le noeud et $F_k^{i-1}$ est l'estampille qui a été précédemment affectée au $(i-1)^{\text{ème}}$ paquet $p_k^{i-1}$ du flux $F_k$.

8.  Procédé d'ordonnancement selon la revendication 3, **caractérisé en ce que** la valeur de l'estampille $F_k^i$ correspond à son temps de départ théorique exprimé dans une unité de temps virtuel définie par une fonction de temps virtuel qui, à un temps $t$, fait correspondre un temps de temps virtuel $v(t)$.

9.  Procédé d'ordonnancement selon la revendication 3, **caractérisé en ce que** la valeur d'estampille $F_k^i$ est donnée par la relation suivante :

$$F_k^i = \frac{L_k^i}{\hat{Q}_j^P\left(a_k^i\right)} + \max\left(\nu\left(a_k^i\right), F_k^{i-1}\right)$$

dans laquelle $L_k^i$ est la longueur du $i^{ème}$ paquet $p_k^i$ du flux $F_k$,

$$\hat{Q}_k^P\left(a_k^i\right)$$

est le débit qui est alloué audit paquet $p_k^i$ au moment $a_k^i$ de son arrivée dans le noeud dudit réseau,

$$\nu\left(a_k^i\right)$$

est la valeur prise par la fonction de temps virtuelle au temps $a_k^i$ d'arrivée dudit paquet $p_k^i$ dans le noeud dudit réseau, $F_k^{i-1}$ est l'estampille qui a été précédemment affectée au $(i-1)^{ème}$ paquet $p_k^{i-1}$ du flux $F_k$, max(x,y) étant la fonction qui a deux valeurs x et y fait correspondre la plus grande des deux.

10. Procédé d'ordonnancement selon la revendication 2 à 7, **caractérisé en ce que** ladite méthode d'estimation est une méthode exponentielle pondérée de paramètre k telle que la $n^{ième}$ estimation $e_n$ soit donnée par la relation suivante :

$$e_n = ke_{n-1} + (1 - k)E$$

dans laquelle E est une valeur qui est intégrée à chaque nouvelle estimation.

11. Système pour la mise en oeuvre du procédé d'ordonnancement selon une des revendications précédentes, du type qui comprend une pluralité d'entrées respectivement prévues pour recevoir des flux de paquets, et, au moins une file d'entrée dont l'entrée est reliée à au moins une entrée dudit système et dont la sortie est reliée au lien de sortie d'un noeud d'un réseau, **caractérisé en ce qu'**il comprend en outre, pour chaque entrée, une unité prévue pour calculer, à chaque nouvelle arrivée de paquet sur ladite entrée par une méthode d'estimation, la valeur du débit instantané, une unité de calcul d'estampille et, à chaque noeud, une unité de gestion d'estampille et une unité de commande de l'émission d'un paquet d'une file sur le lien de sortie dudit noeud.

12. Système selon la revendication 11, **caractérisé en ce qu'**il comporte autant de files d'entrée que d'entrées, chaque file d'entrée étant prévue pour recevoir les flux de paquets issus d'une entrée dudit système.

13. Système selon la revendication 11, **caractérisé en ce qu'**il comporte une file d'entrée qui est prévue pour recevoir les flux de paquets issus des différentes entrées dudit système.

14. Système selon la revendication 11 ou 12, **caractérisé en ce que** l'unité de calcul d'estampille est prévue pour effectuer ledit calcul d'estampille lorsque le paquet concerné arrive en tête de file.

15. Système selon la revendication 11, 12 ou 14, **caractérisé en ce que** l'unité de calcul d'estampille est prévue pour effectuer ledit calcul d'estampille lorsque le paquet concerné est stocké dans ladite file.

16. Système selon la revendication 11 ou 13, **caractérisé en ce que** l'unité de gestion d'estampille est prévue pour effectuer le tri des estampilles par ordre croissant.

**Claims**

1. Packet scheduling process of the type involving serving, on a network node outgoing link, packets originating from a multiplicity of incoming packet streams, a minimum throughput $r_i$ being reserved by each incoming stream and a throughput $x_i(t)$ being allocated at each time $t$ to each incoming stream, **characterised in that** the packets are served in such a way that, at any time, the ratio of part $\Delta x_i(t)$ of the allocated throughput $x_i(t)$ beyond the reserved minimum throughput $r_i$ to part $e_i(t)$ of the instantaneous throughput $\lambda_i(t)$ beyond the reserved minimum throughput $r_i$ has the same value $K(t)$ at this time for all the streams which are active.

2. Scheduling process according to Claim 1, **characterised in that** the said value of instantaneous throughput is evaluated using estimation method $P$ and the value of the said throughput $\hat{Q}_k^P(t)$ allocated at time $t$ to a stream $F_k$ is given by the following relation:

$$\hat{Q}_k^P(t) = r_k + \frac{\hat{e}_k^P(t)}{\sum\limits_{j=1}^{N} \hat{e}_j^P(t)} \cdot \left( C - \sum\limits_{j \in \beta(t)} r_j \right)$$

where $r_k$, $r_j$ are respectively the minimum throughputs reserved for streams $F_k$ and $F_j$, $\hat{e}_k^P(t)$ and $\hat{e}_j^P(t)$ are the estimated excess traffic, the values for which are given by the following relations:

$$\hat{e}_k^P(t) = \left( \hat{\lambda}_k^P(t) - r_k \right) \text{ and } \hat{e}_j^P(t) = \left( \hat{\lambda}_j^P(t) - r_j \right).$$

C is the maximum throughput of the outgoing link at the said node and $\beta(t)$ is all of the active streams at moment in time $t\{F_1$ to $F_N\}$.

3. Scheduling process according to Claim 1 or 2, **characterised in that**, at the arrival time $a_k^i$ of the $i$-th packet $p_k^i$ of a sequence of a stream of packets $F_k$ in the node of the said network, the said packet $p_k^i$ is allocated a stamp $F_k^i$ and the said value of the stamp $F_k^i$ is used to command service for the said packet $p_k^i$ on the outgoing link on the said network.

4. Scheduling process according to Claim 3, implemented for a node provided with a multiplicity of queues $10_1$ to $10_N$ corresponding to incoming streams, **characterised in that** the arrival time $a_k^i$ of a packet $p_k^i$ which is taken into consideration for calculating the said stamp $F_k^i$ is the arrival time of the said packet $p_k^i$ at the head of the corresponding queue $10_k$.

5. Scheduling process according to Claim 3, implemented for a node provided with a single queue 10 where the packets of the said incoming streams are stored, **characterised in that** the arrival time $a_k^i$ of a packet $p_k^i$ which is taken into consideration for calculating the said stamp $F_k^i$ is the arrival time of the said packet $p_k^i$ in the said queue 10.

6. Scheduling process according to Claim 3, **characterised in that** the value of the stamp $F_k^i$ corresponds to its theoretical departure time on the outgoing link of the said node.

7. Scheduling process according to Claim 3, **characterised in that** the value of the stamp $F_k^i$ is given by the following relation:

$$F_k^i = \frac{L_k^i}{\hat{Q}_j^P(a_k^i)} + F_k^{i-1}$$

where $L_k^i$ is the length of the *i*-th packet $p_k^i$ of stream $F_k$,

$$\hat{Q}_j^p\left(a_k^i\right)$$

is the throughput allocated to the said packet $p_k^i$ at the moment $a_k^i$ of its arrival in the node and $F_k^{i-1}$ is the stamp previously allocated to the (*i*-1)-th packet $p_k^{i-1}$ of stream $F_k$.

8. Scheduling process according to Claim 3, **characterised in that** the value of the stamp $F_k^i$ corresponds to its theoretical departure time expressed in a virtual time unit defined by a virtual time function, which, at a time *t*, makes a time of virtual time *v*(*t*) correspond.

9. Scheduling process according to Claim 3, **characterised in that** the value of the stamp $F_k^i$ is given by the following relation:

$$F_k^i = \frac{L_k^i}{\hat{Q}_j^p\left(a_k^i\right)} + \max(v\left(a_k^i\right), F_k^{i-1})$$

where $L_k^i$ is the length of the *i*-th packet $p_k^i$ of stream $F_k$,

$$\hat{Q}_j^p\left(a_k^i\right)$$

is the throughput allocated to the said packet $p_k^i$ at the moment $a_k^i$ of its arrival in the node of the said network,

$$v\left(a_k^i\right)$$

is the value adopted by the virtual time function at the time $a_k^i$ of arrival of the said packet $p_k^i$ in the node of the said network, $F_k^{i-1}$ is the stamp previously allocated to the (*i*-1)-th packet $p_k^{i-1}$ of stream $F_k$ and max(x,y), the function which has two values x and y, makes the greater of the two correspond.

10. Scheduling process according to Claims 2 to 7, **characterised in that** the said estimation method is a weighted exponential method with parameter k such that the n-th estimation $e_n$ is given by the following relation:

$$e_n = ke_{n-1} + (1 - k)E$$

where E is a value which is integrated in each new estimation.

11. System for the implementation of the scheduling process according to one of the preceding claims of the type comprising a multiplicity of inputs respectively intended to receive streams of packets and at least one incoming queue with its input connected to at least one input on the said system and its output connected to the outgoing link of the node of a network, **characterised in that** it also includes, for each input, a unit intended to calculate, at each new arrival of a packet at the said input and using an estimation method, the value for instantaneous throughput, a stamp calculation unit and, at each node, a stamp management unit and a command unit for the transmission of a packet from a queue on the outgoing link of the said node.

12. System according to Claim 11, **characterised in that** it includes as many incoming queues as inputs, each incoming queue being intended to receive streams of packets originating from an input in the said system.

13. System according to Claim 11, **characterised in that** it includes an incoming queue intended to receive streams of packets originating from different inputs in the said system.

**14.** System according to Claim 11 or 12, **characterised in that** the stamp calculation unit is intended to perform the said stamp calculation when the packet concerned arrives at the head of the queue.

**15.** System according to Claim 11, 12 or 14, **characterised in that** the stamp calculation unit is intended to perform the said stamp calculation when the packet concerned is stored in the said queue.

**16.** System according to Claim 11 or 13, **characterised in that** the stamp management unit is intended to sort the stamps in increasing order.

**Patentansprüche**

**1.** Paketablaufsteuerung des Typs, der darin besteht, auf einer Ausgangsverbindung eines Knotens eines Netzes die Pakete zuzubringen, die aus einer Vielzahl von Eingangspaketströmen stammen, wobei ein Mindestdurchsatz $r_i$ von jedem Eingangsstrom reserviert ist, und ein Durchsatz $x_i(t)$ in jeder Zeit t jedem Eingangsstrom zugeordnet ist, **dadurch gekennzeichnet, dass** die Pakete derart zugebracht werden, dass jederzeit das Verhältnis des Teils $\Delta x_i(t)$ des zugeordneten Durchsatzes $x_i(t)$ über dem reservierten Mindestdurchsatz $r_i$ auf dem Teil $e_i(t)$ des Sofortdurchsatzes $\lambda_i(t)$ über den reservierten Mindestdurchsatz $r_i$ in diesem Zeitpunkt einen gleichen Wert $K(t)$ für alle Ströme annimmt, die aktiv sind.

**2.** Paketablaufsteuerung nach Anspruch 1, **dadurch gekennzeichnet, dass** der Sofortdurchsatzwert durch eine Schätzungsmethode $P$ bewertet wird, wobei der Wert des einem Strom $F_k$ im Zeitpunkt $t$ zugeordneten Durchsatzes $Q_k^P(t)$ durch die folgende Gleichung gegeben ist:

$$\hat{Q}_k^P(t) = r_k + \frac{\hat{e}_k^P(t)}{\sum_{j=1}^{N} \hat{e}_j^P(t)} \cdot \left( C - \sum_{j \in \beta(t)} r_j \right)$$

wobei $r_k$, $r_j$ jeweils die den Strömen $F_k$ und $F_j$ reservierten Mindestdurchsätze sind, und $\hat{e}_k^P(t)$ und $\hat{e}_k^P(t)$ die geschätzten überschüssigen Verkehrsaufkommen sind, deren Werte durch die folgenden Gleichungen gegeben werden:

$$\hat{e}_k^P(t) = \left( \hat{\lambda}_k^P(t) - r_k \right) \qquad \text{und} \qquad \hat{e}_j^P(t) = \left( \hat{\lambda}_j^P(t) - r_j \right).$$

C ist der maximale Durchsatz der Ausgangsverbindung des Knotens und $\beta(t)$ ist die Gesamtheit der im Augenblick $t\{F1 \text{ bis } F_N\}$ aktiven Ströme.

**3.** Paketablaufsteuerung nach Anspruch 1 oder 2, **dadurch gekennzeichnet, dass** im Eintreffzeitpunkt $a_k^i$ des i. Pakets $p_k^i$ einer Sequenz eines Paketstroms $F_k$ in dem Knoten des Netzes man dem Paket $p_k^i$ einen Stempel $F_k^i$ zuweist und man den Stempelwert $F_k^i$ verwendet, um die Steuerung des Zubringens des Pakets $p_k^i$ auf der Ausgangsverbindung des Netzes sicherzustellen.

**4.** Paketablaufsteuerung nach Anspruch 3, die für einen Knoten angewandt wird, der mit einer Vielzahl von Warteschlangen $10_1$ bis $10_N$ versehen ist, die den Eingangsströmen entsprechen, **dadurch gekennzeichnet, dass** die Ankunftzeit $a_k^i$ eines Pakets $p_k^i$, die für die Berechnung des Stempels $F_k^i$ berücksichtigt wird, die Ankunftzeit des Pakets $p_k^i$ an der Spitze der entsprechenden Warteschlange $10_k$ ist.

5. Paketablaufsteuerung nach Anspruch 3, die für einen Knoten angewandt ist, der mit einer einzigen Warteschlange 10 versehen wird, in der die Pakete der Eingangsströme gelagert sind, **dadurch gekennzeichnet, dass** die Ankunftzeit $a_k^i$ eines Pakets $p_k^i$, die für die Berechnung des Stempels $F_k^i$ berücksichtigt wird, die Ankunftszeit des Paketes $p_k^i$ in der Warteschlange 10 ist.

6. Paketablaufsteuerung nach Anspruch 3, **dadurch gekennzeichnet, dass** der Wert des Stempels $F_k^i$ seiner theoretischen Abgangszeit auf der Ausgangsverbindung des Knotens entspricht.

7. Paketablaufsteuerung nach Anspruch 3, **dadurch gekennzeichnet, dass** der Wert des Stempels $F_k^i$ durch die folgende Gleichung gegeben ist:

$$F_k^i = \frac{L_k^i}{\hat{Q}_j^P(a_k^i)} + F_k^{i-1}$$

wobei $L_k^i$ die Länge des i. Pakets $p_k^i$ des Stroms $F_k$ ist,

$$\hat{Q}_j^P(a_k^i)$$

der Durchsatz ist, der dem Paket $p_k^i$ im Augenblick $a_k^i$ seines Eintreffens in dem Knoten ist, und $F_k^{i-1}$ der Stempel ist, der zuvor dem (i-1). Paket $p_k^{i-1}$ des Stroms $F_k$ zugewiesen wurde.

8. Paketablaufsteuerung nach Anspruch 3, **dadurch gekennzeichnet, dass** der Wert des Stempels $F_k^i$ seiner theoretischen Abgangszeit ausgedrückt in einer virtuellen Zeiteinheit ist, die durch eine virtuelle Zeitfunktion definiert wird, die einem Zeitpunkt t eine Zeit virtueller Zeit v(t) entsprechen lässt.

9. Paketablaufsteuerung nach Anspruch 3, **dadurch gekennzeichnet, dass** der Wert des Stempels $F_k^i$ durch die folgende Gleichung gegeben ist:

$$F_k^i = \frac{L_k^i}{\hat{Q}_j^P(a_k^i)} + \max(v(a_k^i), F_k^{i-1})$$

wobei $L_k^i$ die Länge des i. Pakets $p_k^i$ des Stroms $F_k$ ist,

$$\hat{Q}_k^P(a_k^i)$$

der Durchsatz ist, der dem Paket $p_k^i$ im Augenblick $a_k^i$ seines Eintreffens in dem Knoten des Netzes zugewiesen wird ist, v($a_k^i$) der Wert ist, der von der virtuellen Zeitfunktion im Zeitpunkt $a_k^i$ des Eintreffens des Pakets $p_k^i$ in dem Knoten des Netzes angenommen wird, $F_k^{i-1}$ der Stempel ist, der zuvor dem (i-1). Paket $p_k^{i-1}$ des Stroms $F_k$ zugewiesen wurde, wobei max(x, y) die Funktion ist, die mit zwei Werten x und y den größten der beiden übereinstimmen lässt.

10. Paketablaufsteuerung nach Anspruch 2 bis 7, **dadurch gekennzeichnet, dass** die Schätzungsmethode eine gewichtete exponentielle Methode mit Parameter k derart ist, dass die n. Schätzung $e_n$ durch die folgende Gleichung gegeben ist:

$$e_n = ke_{n-1} + (1-k)E$$

wobei E ein Wert ist, der in jede neue Schätzung integriert wird.

11. System zum Anwenden der Paketablaufsteuerung nach einem der vorhergehenden Ansprüche, des Typs, der eine Mehrzahl von Eingängen umfasst, die jeweils vorgesehen sind, um Paketströme zu empfangen, und mit mindestens einer Eingangsschlange, deren Eingang mit mindestens einem Eingang des Systems verbunden ist, und deren Ausgang mit der Ausgangsverbindung eines Knotens eines Netzes verbunden ist, **dadurch gekennzeichnet, dass** es ferner für jeden Eingang eine Einheit umfasst, die dazu vorgesehen ist, bei jeder neuen Paketankunft auf dem Eingang durch eine Schätzungsmethode den Wert des Sofortdurchsatzes zu berechnen, eine Stempelberecheneinheit und, an jedem Knoten eine Einheit zur Stempelverwaltung und eine Steuereinheit des Sendens eines Pakets einer Schlange auf die Ausgangsverbindung des Knotens.

12. System nach Anspruch 11, **dadurch gekennzeichnet, dass** es ebenso viele Eingangsschlangen wie Eingänge umfasst, wobei jede Eingangsschlange ausgestattet ist, um die Paketströme zu empfangen, die aus einem Eingang des Systems stammen.

13. System nach Anspruch 11, **dadurch gekennzeichnet, dass** es eine Eingangsschlange umfasst, die ausgestattet ist, um die Paketströme zu empfangen, die aus verschiedenen Eingängen des Systems stammen.

14. System nach Anspruch 11 oder 12, **dadurch gekennzeichnet, dass** die Stempelberechnungseinheit ausgestattet ist, um die Stempelberechnung durchzuführen, wenn das betreffende Paket am Kopf der Schlange eintrifft.

15. System nach Anspruch 11, 12 oder 14, **dadurch gekennzeichnet, dass** die Stempelberechnungseinheit vorgesehen ist, um die Berechnung des Stempels durchzuführen, wenn das betreffende Paket in der Schlange gelagert ist.

16. System nach Anspruch 11 oder 13, **dadurch gekennzeichnet, dass** die Einheit zur Stempelverwaltung vorgesehen ist, um das Sortieren der Stempel in steigender Reihenfolge durchzuführen.

FIG.1

FIG.2